# EUROPEAN PATENT APPLICATION

(11) **EP 2 733 769 A1**
(43) Date of publication of application: **21.05.2014**
(21) Application number: 13157596.1
(22) Date of filing: 04.03.2013
(51) Int. Cl.: H01M 2/10, H01M 2/20, H04M 1/02

(54) **Hand-held electronic device, battery with connector, battery lid, connector and connector disconnection preventing method**

(30) Priority: 16.11.2012 JP 2012252720
(71) Applicant: NINTENDO CO., LTD., Minami-ku, Kyoto 601 (JP)
(72) Inventor: Kumazaki, Daisuke, Kyoto, 601-8501 (JP); Takamoto, Junji, Kyoto, 601-8501 (JP); Nishimura, Masahiko, Kyoto, 601-8501 (JP); Goto, Yoshitomo, Kyoto, 601-8501 (JP); Okamura, Takanori, Kyoto, 601-8501 (JP)
(74) Representative: Lang, Johannes

(57) **Abstract**

An electronic device includes a battery accommodating portion in which a battery unit is accommodated. A male connector is provided on wires drawn-out from a main unit of the battery unit, and the male connector is inserted (connected) to a female connector which is fixed on a circuit board provided within a housing, and a battery lid is attached to the housing. The battery lid is provided with a projection on a surface which is rendered as an inner surface side when the battery lid is attached, and the projection prevents a connection state of the male connector and the female connector from being disconnected. That is, the projection restrains a movement of the male connector in a direction that the male connector comes out.

## Description

### BACKGROUND OF THE INVENTION

### Filed of the invention

The present invention relates to a hand-held electronic device, a battery with connector, a battery lid, a connector and a connector disconnection preventing method, and more specifically relates to a hand-held electronic device in which a battery is connected by a connector, a battery with connector, a battery lid, a connector and a connector disconnection preventing method.

### Description of the related art

One example of the related art is disclosed in Japanese Patent Application Laying-Open No. 2009-32595 [H01M 2/10] (Document 1) laid-open on February 12, 2009. In the structure of the battery pack accommodating portion of the portable electronic equipment case disclosed in the Document 1, when the battery pack is to be accommodated in the battery gutter, the battery pack is pushed into the battery gutter, and then, a fitting projection of the battery pack is fit to a fitting groove of the battery gutter thereby to connect the electrode of the battery pack and the electric power supply terminal within the battery gutter to each other.

However, in the battery pack accommodating portion structure of the portable electronic equipment case disclosed in this related art, since the electrode provided on the side surface of the battery pack is directly connected to the electric power supply terminal within the battery gutter, there is not provided with components such as a wire extended from the battery pack and a connector. Therefore, no mechanism for preventing a connector from being disconnected is provided.

### SUMMARY OF THE INVENTION

It is a primary object of the present invention to provide a novel hand-held electronic device, a battery with connector, a battery lid, a connector and a connector disconnection preventing method.

It is another object of the present invention to provide a hand-held electronic device, a battery with connector, a battery lid, a connector and a connector disconnection preventing method, capable of preventing a connector provided on a wire extended from a battery from being disconnected.

A first invention is a hand-held electronic device which comprises a battery, an accommodating portion, a battery lid and a built-in connector. The battery is provided with a main body and a battery connector which are coupled to each other by a wire. The accommodating portion accommodates the battery. The battery lid covers the accommodating portion. The built-in connector is provided inside the accommodating portion and connected with the battery connector. A projection is provided on the battery lid, the projection preventing a connection state of the battery connector and the built-in connector from being disconnected when the accommodating portion is covered by the battery lid in a state that the battery is accommodated in the accommodating portion and the battery connector and the built-in connector are connected to each other.

According to the first invention, since the connection state between the battery connector and the built-in connector is prevented from being disconnected by the projection provided on the battery lid, it is possible to prevent the connector falling out.

A second invention is according to the first invention, wherein the battery lid is attached to the electronic device by being slid, and a sliding direction of the battery lid and a connecting direction of the battery connector to the built-in connector are identical with each other, and the projection is brought in proximity to or into contact with a first surface at a side opposite to the connecting direction of the battery connector. In a case that the projection is brought into contact with the first surface, for example, a force which plunges the battery connector in the connecting direction acts.

According to the second invention, it is possible to not only prevent the connection state of the connectors from being disconnected but also render the connection state strong.

A third invention is according to the first invention, wherein the projection is brought in proximity to or into contact with a first surface at a side opposite to the connecting direction of the battery connector. The battery connector is provided with a handling portion having the first surface and a second surface at a side opposite to the first surface. In a case that the battery connector is to be disconnected, for example, a finger is hung over the second surface of the handling portion, and then, the handling portion is moved in a disconnecting direction opposite to the connecting direction.

According to the third invention, since the handling portion is provided, if the battery connector is to be disconnected, it is possible to easily separate the battery connector.

A fourth invention is according to any one of the first to third inventions, wherein the projection is formed in a manner capable of being elastically deformed. In a case that the projection is brought into contact with the battery connector, for example, a restoring force due to the elastic deformation acts on the battery connector, and therefore, the battery connector is biased toward the built-in connector.

According to the fourth invention, in a case that the battery connector is biased toward the built-in connector, it is possible to prevent the connection state from being disconnected, and the battery connector from being moved in a separating direction. Furthermore, since the projection is elastically deformed, it is possible to absorb a dimensional error for each product such as a positional relationship between the battery lid and the accommodating portion and a position of the projection on the battery lid within a range of the elastic deformation of the projection.

A fifth invention is according to the fourth invention, wherein the projection includes a plate member a part of which is fixed to the battery lid, and a portion brought in proximity to or into contact with the battery connector is formed near the battery connector in comparison with the fixed part. By not fixing a portion other than the part fixed to the battery lid to the battery lid, an elastically-deformable projection can be provided.

According to the fifth invention, it is possible to form an elastically-deformable projection with simple structure.

A sixth invention is a battery with connector accommodated, in use, in an accommodating portion of a hand-held electronic device which comprises the accommodating portion, a battery lid which is provided with a projection and covers the accommodating portion and a built-in connector provided inside the accommodating portion, comprising: a main body; and a battery connector which is coupled to the main body via a wire, and connected to the built-in connector and has a member by which the connection state to the built-in connector is prevented from being disconnected by the projection provided on the battery lid when the accommodating portion is covered by the battery lid.

A seventh invention is a battery lid used in a hand-held electronic device comprising an accommodating portion, a built-in connector provided inside the accommodating portion, and a battery which is accommodated in the accommodating portion, and includes a main body and a battery connector coupled to the main body via a wire and connected to the built-in connector, and covers the accommodating portion, comprising: a projection which prevent a connection state of the battery connector and the built-in connector from being disconnected when the battery lid covers the accommodating portion in a state that the battery is accommodated in the accommodating portion and the battery connector and the built-in connector are connected to each other.

An eighth invention is a connector for a battery accommodated in a battery accommodating portion of a hand-held electronic device, comprising: a connector main body; a concave portion formed on the connector main body and convex portions formed by the concave portion at ends of the connector main body, wherein a connection state of the connector can be disconnected by moving the connector in a disconnecting direction by putting a finger in the concave portion, and when the accommodating portion is covered by the battery lid, an end surface of the convex portion is brought in proximity to or into contact with a projection provided on the battery lid, whereby a connection state with the hand-held electronic device is prevented from being disconnected.

A ninth invention is a connector disconnection preventing method for a hand-held electronic device which comprises a battery including a main body and a battery connector coupled to the main body via a wire, an accommodating portion for accommodating the battery, a battery lid covering the accommodating portion and a built-in connector which is provided inside the accommodating portion and connected to the battery connector, comprising a step of: placing the projection provided on the battery lid to be brought in proximity to or into contact with the battery connector when the battery lid covers the accommodating portion in a state that the battery is accommodated in the accommodating portion and the battery connector and the built-in connector are connected to each other, whereby a connection state of the battery connector and the built-in connector are prevented from being disconnected.

According to the sixth to ninth inventions, likewise the first embodiment, it is possible to prevent a connector from being disconnected.

The above described objects and other objects, features, aspects and advantages of the embodiments will become more apparent from the following detailed description of the embodiments when taken in conjunction with the accompanying drawings.

### BRIEF DESCRIPTION OF THE DRAWINGS

Figure 1 is an appearance view showing a hand-held electronic device that is one embodiment of the present invention.
Figure 2 is an appearance view showing an example of a battery unit capable of being accommodated in a battery accommodating portion shown in Figure 1.
Figure 3 is a perspective view showing a connector attached to a wire of the battery unit.
Figure 4 is an appearance view showing an example of a projection provided on a battery lid which covers the battery accommodating portion.
Figure 5 is an appearance view showing a situation that the battery unit is accommodated in the battery accommodating portion.
Figure 6 is a cross-sectional view at a line VIa - VIa shown in Figure 5 and a view showing a state that is in the middle of attaching the battery lid in the cross-sectional view.

### DETAILED DESCRIPTION OF NON-LIMITING EXAMPLE EMBODIMENTS

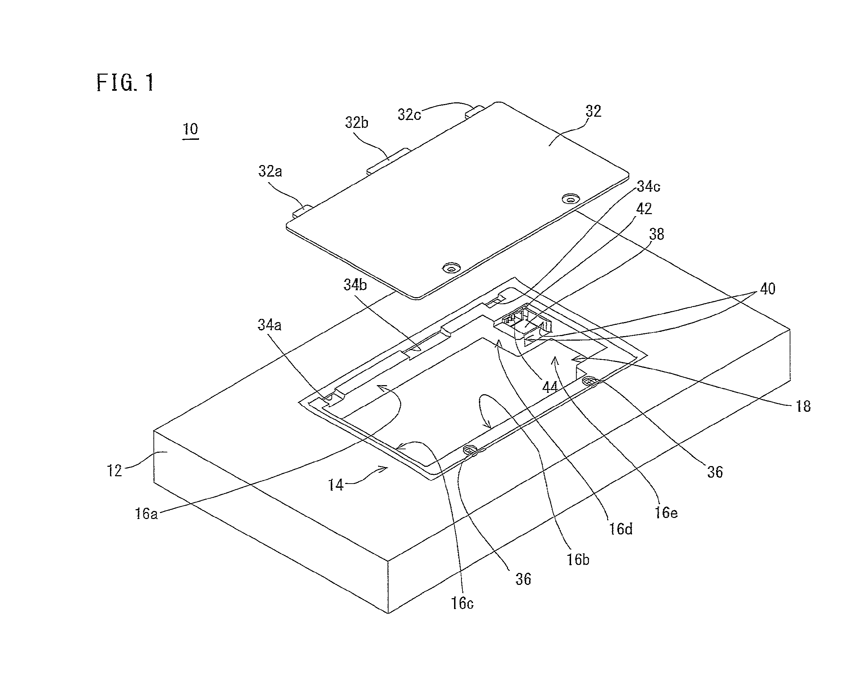

With referring to drawings, in the following, a non-limiting example of a hand-held electronic device (hereinafter, may be simply called as "electronic device") 10 will be described. The electronic device 10 shown in Figure 1 includes a housing 12, and the housing 12 has a size capable of being held by a user with one hand or both hands.

A battery accommodating portion 14 is formed on a rear surface of the housing 12, and inside the housing 12, although not shown, an electric circuitry and components which operate with being applied with an electric power from a battery (not shown in Figure 1) accommodated in the battery accommodating portion 14 are provided. In some cases, on a front surface of the housing 12, a display which is driven by the battery and displays an output from the electric circuitry and the components may be provided.

An attaching portion 16 which is for attaching a battery unit (described later) and has a box shape with bottom is formed in the battery accommodating portion 14. The attaching portion 16 has a rectangular plane shape being horizontally long as a whole, and a predetermined depth capable of receiving the battery unit having a thickness. The attaching portion 16 is, in this embodiment shown, defined by an upper and lower relatively long inner walls 16a and 16b and left and right relatively short inner walls 16c and 16d, and a part of the right side inner wall 16d is cut away, and the attaching portion 16 and a wire accommodating portion 18 are communicated with each other through such a cut-away portion 16e.

In a battery accommodating portion 14 of the rear surface of the housing 12, above an upper side 16a of the attaching portion 16, holes 34a, 34b and 34c for being inserted with claws 32a, 32b and 32c of a battery lid 32 are formed, and outside the lower side 16b of the attaching portion 16, holes 36 for fixing the battery lid 32 with screws are formed. In addition, the screws are tapping screws in this embodiment, no female screw is formed in each of holes 36, but each of the holes 36 may be formed with a female screw.

A circuit board 38 for the aforementioned electric circuitry is exposed in the upper portion of the wire accommodating portion 18 communicating with the attaching portion 16 through the cut-away portion 16e, and sandwiching the circuit board 38, guide surfaces 40 are formed at both sides.

A female connector 42 is provided in a deeper portion of the guide surface 40, that is, an upper end of the wire accommodating portion 18. The female connector 42 involves or contains a plurality of (four (4), in this embodiment) connecting terminals 44 which are electrically connected to required portions of the above-described electric circuitry. Such a female connector 42 is fixed to the circuit board 38 by soldering.

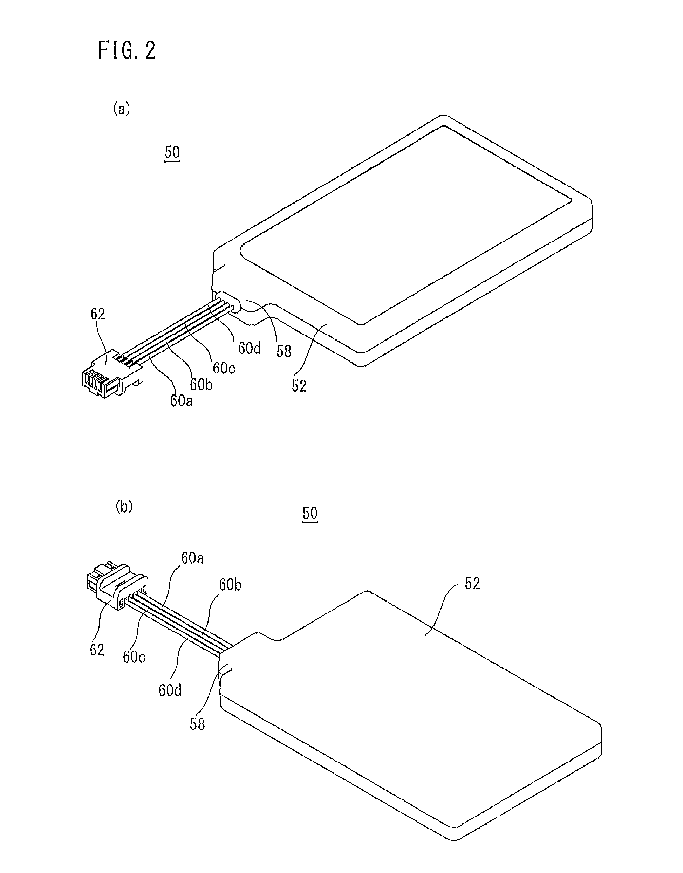

A battery unit 50 to be accommodated in the battery accommodating portion 14 shown in Figure 1 is shown in Figure 2. The battery unit 50 shown in Figure 2 includes a horizontally-long main body 52, and although not shown, within the main body 52, a rechargeable battery such as a lithium ion battery, a temperature detecting device (a thermistor, for example) and a control circuit are incorporated.

A projected portion 58 that a part of the main body 52 is projected is formed, and through the projected portion 58, four (4) (in this embodiment) wires 60a, 60b, 60c and 60d are drawn-out. Out of the four wires, the wire 60a is a red color wire, for example, and outputs (+) of a battery voltage, and the wire 60b is a grey color wire, for example, and outputs an output signal of the above-described temperature detecting device, and the wire 60c is a black color wire, for example, and outputs (-) of the battery voltage, and the wire 60d is a white color wire, for example, and outputs a peculiar identification signal of the battery unit 50. That is, the wire 60a is a plus power wire, the wire 60b is a signal wire outputting a signal associated with a detected temperature, the wire 60c is a minus power wire, and the wire 60d is a signal wire outputting the identification signal of the battery unit 50.

However, it is not necessary to be limited to such structure. In other embodiments, the wire 60a may be a white color wire which outputs the identification signal, the wire 60b may be a black color wire which outputs (-) of the battery voltage, the wire 60c may be a grey color wire which outputs the output signal of the temperature detecting device, and the wire 60d may be a red color wire which outputs (+) of the battery voltage.

In this embodiment, a resistor circuit is formed in the control circuit (not shown) of the battery unit 50, and a peculiar resistant value (a current value or a voltage value) for the battery unit 50 is output from the wire 60d as the identification signal. A computer (not shown) of the electronic device 10 can identify a manufacturer of the battery unit 50 based on the identification signal because a battery characteristic (a charge characteristic) of the battery unit 50 varies among the manufacturers. In the electronic device 10, for example, it is necessary to display (output) a battery residual quantity or to perform a charge based on a correct battery characteristic (charge characteristic).

At the tip ends of the wires 60a-60d, a male connector 62 is attached (provided). That is, the main body 52 and the male connector 62 are coupled to each other via the wires 60a-60d. The male connector 62 includes four (4) connecting terminals 64. Each of the connecting terminals 64 is electrically and mechanically connected to each of the blade terminal 44 by sandwiching the blade terminal 44 of the female connector 42 at both sides. If the male connector 62 is pushed along with the guide surfaces 40 to insert (connect) to the female connector 42, each terminal 64 sandwiches corresponding terminal 44 whereby the terminal 64 can be connected to the terminal 44.

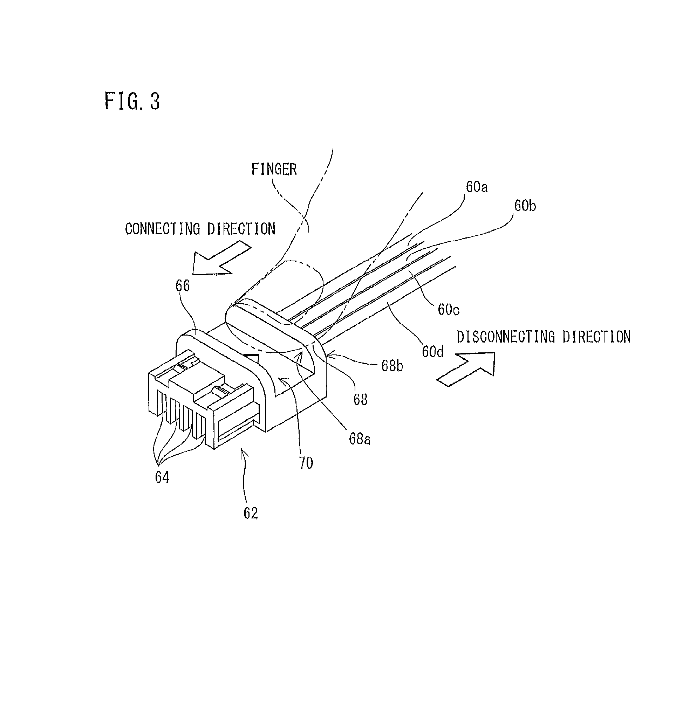

Here, with referring to Figure 3, the male connector 62 will be described. On an upper surface of the male connector 62, there are formed with two (2) rising pieces 66 and 68 with an interval, and a concave portion 70 is formed between the rising pieces 66 and 68. Inversely, by forming the concave portion 70 on the upper surface of the male connector 62, convex portions (convexity), i.e., the rising pieces 66 and 68 are formed. By putting a finger tip in the concave portion 70 and moving the finger tip in a direction that the male connector 62 is disconnected, the male connector 62 can be disconnected from the female connector 42. At this time, the finger tip abuts an inside surface (inner surface) 68a of the rising piece 68. Therefore, the rising piece 68 functions as a handle or knob in disconnecting the male connector 62. Therefore, it is possible to easily disconnect the male connector 62.

In addition, as described above, a direction that the male connector 62 is connected to the female connector 42, that is, a connecting direction is, of course, opposite to the above-described direction that the male connector 62 is disconnected.

Furthermore, it is possible to function the rising piece 66 as a handle or knob. In such a case, the male connector 62 may be moved in an arrow mark direction in a state that the rising piece 66 is held with fingers.

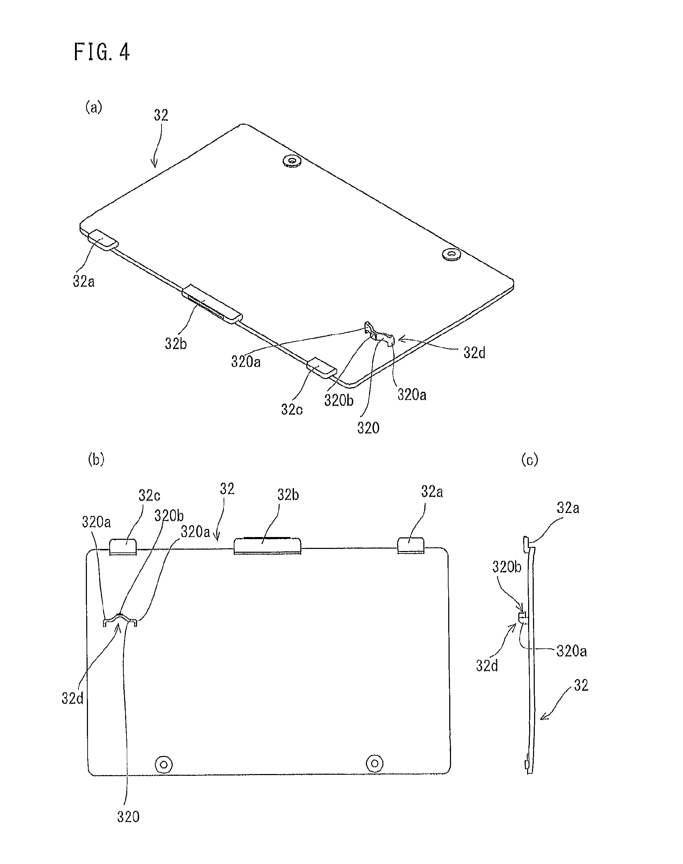

Furthermore, as shown in Figures 4 (a), 4(b) and 4(c), a projection 32d is provided on the battery lid 32 shown in Figure 1. It is to be noted that the projection 32d is provided on a surface which becomes an inner side when the battery lid 32 is attached to the housing 12. Figure 4(a) is a perspective view showing the inner side surface of the battery lid 32 with being viewed from diagonally above. Figure 4(b) is a front view when the inner side surface of the battery lid 32 is viewed from a front surface. Figure 4(c) is a side view when the battery lid 32 is viewed from a side surface.

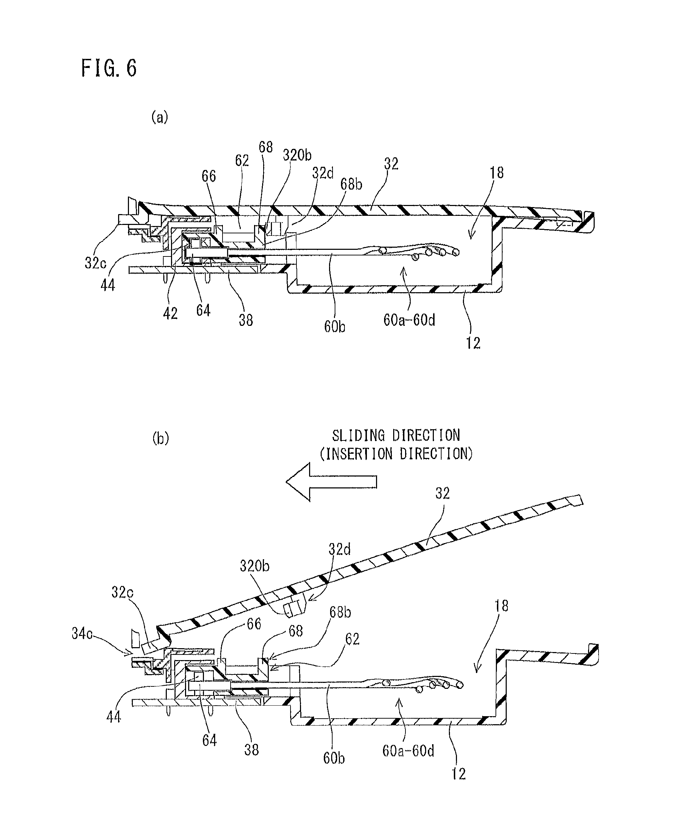

As shown in Figure 4(a) and Figure 4(b), the projection 32d is formed by a plate member 320, and end portions 320a at both ends thereof are fixed to the battery lid 32. The plate member 320 is projected toward a direction that claws 32a-32c are provided. This portion being projected (projected portion) 320b is brought in proximity to or into contact with an outer side surface (outer surface) 68b of the rising piece 68 of the male connector 62 (see Figure 6(a)). That is, the projection 32d is arranged at a position that the projected portion 320b is brought in proximity to or into contact with the outer side surface (outer surface) 68b of the rising piece 68 of the male connector 62 when the battery lid 32 is attached to the housing 12. In other words, in a case that the battery unit 50 is accommodated in the battery accommodating portion 14 and the male connector 62 is connected to the female connector 42, and then, the battery lid 32 is attached to the housing 12, the projected portion 320b of the plate member 320 is arranged near the male connector 62 (female connector 42) in comparison with end portions 320a.

Furthermore, as shown in Figure 4(b), it will be seen that the projection 32d has a projected shape (mountain shape) when the inner side of the battery lid 32 is viewed from the front surface in a state that the claws 32a-32c are set at an upper side. It is to be noted that as seen from Figure 4(a) and Figure 4(c), a portion of the plate member 320 other than the end portions 320a at both ends thereof is not fixed to the battery lid 32. Therefore, if the projected portion 320b is pushed in a direction opposite to the claws 32a-32c, for example, the plate member 320, that is, the projection 320d is elastically deformed. Therefore, a restoring force acts toward a side of the claws 32a-32c.

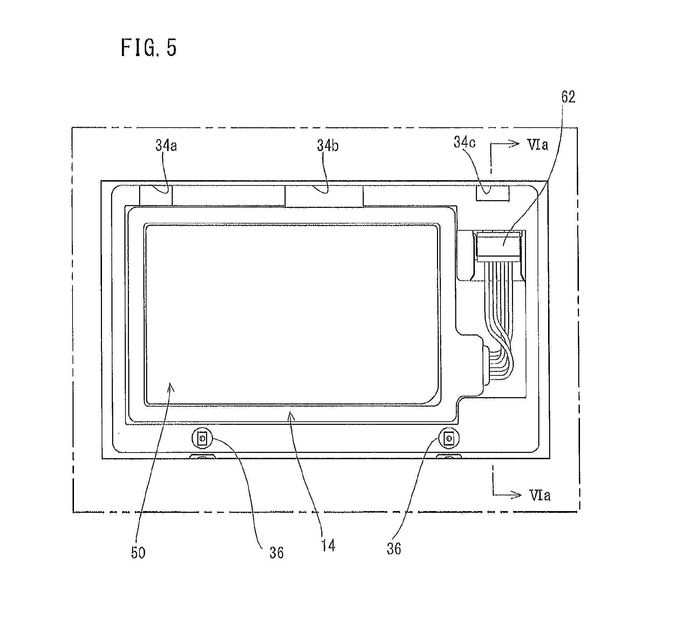

Figure 5 shows a state that the battery unit 50 is accommodated in the battery accommodating portion 14 shown in Figure 1, and the male connector 62 is connected to the female connector 42. In addition, accommodation of the battery unit 50 and connection of the male connector 62 may be performed in an arbitrary order. A cross-sectional view at lines Via - Via in a case that the battery lid 32 is attached to the housing 12 in the state shown in Figure 5 is shown in Figure 6(a), and Figure 6(b) is a view showing the middle of attaching the battery lid 32.

When the battery lid 32 is attached to the housing 12 as shown in Figure 6(a), for example, the projection 32d provided on the battery lid 32 is brought into contact with (abuts) the male connector 62. Specifically, the projected portion 320b formed on the projection 32d abuts the outer surface 68b of the rising piece 68 of the male connector 62. At this time, due to the law of action and reaction, the projected portion 320b of the projection 32d is pushed, and therefore, a restoring force as described above acts. Therefore, the male connector 62 is biased toward a side of the female connector 42, and thus, restricted from being moved toward a direction that the male connector 62 is disconnected. Furthermore, because the projection 32d is elastically deformable, it is possible to absorb the dimension error for each product such as a positional relationship between the battery lid 32 and the battery accommodating portion 14 or a position of the projection 32d on the battery lid 32 within a range that the projection 32d is elastically deformed.

Although not shown, when the battery lid 32 is attached to the housing 12, there is an occasion that the projection 32d is not brought into contact with the male connector 62 but in proximity to the male connector 62. This causes due to a dimension error of the product. Even in such a case, since the male connector 62 is restricted from being moved toward a direction opposite to the female connector 42 by the projection 32d, the male connector 62 is never disconnected as far as the projection 32d is not damaged. That is, the connection state of the female connector 42 and the male connector 62 is not disconnected.

Although a detailed description is omitted here, the position of the projection 32d is set such that the connection state of the terminals 44 and the terminals 64 are not disconnected even if the male connector 62 is moved toward a direction that the male connector 62 is disconnected (a direction that the male connector 62 is pulled out).

Thus, the projection 32d is provided for preventing the connection state (fit state) between the female connector 42 and the male connector 62 from being disconnected when the battery lid 32 is attached to the housing 12. In this embodiment shown, the projection 32d restricts a movement of the male connector 62 toward a direction opposite to an insertion direction. Therefore, it is possible to prevent the male connector 62 from falling out,

In a case that the battery lid 32 is attached to the housing 12, as shown in Figure 6(b), the battery lid 32 is slid such that the claw 32c (32a, 32b) formed on the battery lid 32 is inserted into the hole 34c (34a, 34b) formed on the housing 12 (battery accommodating portion 14). In Figure 6(b), a sliding direction (inserting direction) is shown by an arrow mark. Then, the battery lid 32 is arranged so as to cover an entire battery accommodating portion 14 of the housing 12, and then fixed with screws. As seen from Figure 3 and Figure 6(b), since the connecting direction of the male connector 62 and the sliding direction of the battery lid 32 are identical to each other, in a case that the projection 32d abuts the male connector 62, a force acts in a direction that the male connector 62 is pushed in.

According to this embodiment, by providing the projection on the battery lid so as to prevent the connection state of the female connector provided inside the electronic device and the male connector provided on the wire drawn-out from the main body of the battery unit from being disconnected, it is possible to prevent the male connector from falling out. Especially, the battery lid is fixed with screws, and therefore, normally, the inside of the battery accommodating portion cannot be visibly seen, and accordingly, if the connector is disconnected, the electric power becomes not to be supplied, and therefore, there is a possibility that the user believes that the electronic device goes broken, but it is possible to prevent such a state from occurring.

Furthermore, according to this embodiment shown, in a case that the projection is brought into contact with the outer surface of the rising piece of the male connector, the male connector is biased toward the female connector by the restoring force of the projection being elastically deformable, and therefore, not only the male connector can be prevented from being disconnected but also a movement of the male connector itself toward a direction that the male connector is disconnected can be prevented.

In addition, in this embodiment shown, the projection is provided on the battery lid such that the same is brought in proximity to or into contact with the outer surface 68b of the rising piece 68 which also functions as a handle, but not limited to such structure. For example, the projection may be provided on the battery lid such that the same is brought in proximity to or into contact with the inner surface of the rising piece 66 (a surface opposite to an inner surface of the rising piece 68).

Furthermore, in this embodiment shown, disconnection of the connector provided on the wire drawn-out from the main body of the battery unit is prevented, but the same or similar structure may be adopted in a case that another electronic component other than the battery unit is connected by a connector.

Furthermore, in this embodiment, the projection is formed in a manner that when the surface which becomes an inner side in attaching the battery lid is viewed from a front surface, the projection becomes a convexity shape (mountain shape), but not limited to such a shape. A projection of a simple plate-like or bar-like may be provided to be extended in a vertical direction or approximately vertical direction on a surface which becomes an inner side in attaching the battery lid. That is, it is possible to prevent the connection state of the connector from being disconnected even if the projection is not elastically deformable. Furthermore, a projection having a shape that only a left side or a right side of the projected portion of the projection shown in the above-described embodiment when the surface which becomes an inner side in attaching the battery lid is viewed from the front surface is left. That is, the projection may be formed in a manner that one end portion of the plate member is fixed to the battery lid, but other portions are not fixed to the battery lid, and another end portion of the plate member is near the connector in comparison with the one end portion, and may be brought in proximity to or into contact with the outer surface of the rising piece.

While certain example systems, methods, storage media, devices and apparatuses have been described herein, it is to be understood that the appended claims are not to be limited to the systems, methods, storage media, devices and apparatuses disclosed, but on the contrary, are intended to cover various modifications and equivalent arrangements included within the scope of the appended claims.

## Claims

1. A hand-held electronic device (10), comprising:
a battery (50) provided with a main body (52) and a battery connector (62) which are coupled to each other by a wire (60a-60d);
an accommodating portion (14) which accommodates the battery (50);
a battery lid (32) which covers the accommodating portion (14);
a built-in connector (42) provided inside the accommodating portion (14) and connected with the battery connector (62); and
a projection (32d) provided on the battery lid (32), the projection (32d) preventing a connection state of the battery connector (62) and the built-in connector (42) from being disconnected when the accommodating portion (14) is covered by the battery lid (32) in a state that the battery (50) is accommodated in the accommodating portion (14) and the battery connector (62) and the built-in connector (42) are connected to each other.

2. A hand-held electronic device (10) according to claim 1, wherein the battery lid (32) is attached to the electronic device (10) by being slid, and a sliding direction of the battery lid (32) and a connecting direction of the battery connector (62) to the built-in connector (42) are identical with each other, and the projection (32d) is brought in proximity to or into contact with a first surface (68b) at a side opposite to the connecting direction of the battery connector (62).

3. A hand-held electronic device (10) according to claim 1, wherein the projection (32d) is brought in proximity to or into contact with a first surface (68b) at a side opposite to the connecting direction of the battery connector (62), and the battery connector (62) is provided with a handling portion (68) having the first surface (68b) and a second surface (68a) at a side opposite to the first surface (68b).

4. A hand-held electronic device (10) according to any one of claims 1 to 3, wherein the projection (32d) is formed in a manner capable of being elastically deformed.

5. A hand-held electronic device (10) according to claim 4, wherein the projection (32d) includes a plate member (320) a part (320a) of which is fixed to the battery lid (32), and a portion (320b) brought in proximity to or into contact with the battery connector (62) is formed near the battery connector (62) in comparison with the fixed part (320a).

6. A battery(50) with connector accommodated, in use, in an accommodating portion (14) of a hand-held electronic device (10) which comprises the accommodating portion (14), a battery lid (32) which is provided with a projection (32d) and covers the accommodating portion (14) and a built-in connector (42) provided inside the accommodating portion (14), comprising:
a main body (52); and
a battery connector (62) which is coupled to the main body (52) via a wire (60a-60d), and connected to the built-in connector (42) and has a member (68) by which the connection state to the built-in connector (42) is prevented from being disconnected by the projection (32d) provided on the battery lid (32) when the accommodating portion (14) is covered by the battery lid (32).

7. A battery (50) with connector according to claim 6, wherein the member (68) is formed such that a surface (68b) opposite to a connecting direction of the battery connector (62) is brought in proximity to or into contact with the projection (32d).

8. A battery with connector according to claim 6 or 7, wherein the battery connecter (62) is provided with a convex portion (68).

9. A battery (50) with connector according to claim 8, wherein the convex portion (68) has a first surface (68b) at a side opposite to the connecting direction of the battery connector (62) and a second surface (68a) at a side opposite to the first surface (68b),
the first surface (68b) is used for preventing a connection state with the build-in connector (42) from being disconnected by being brought in proximity to or into contact with the projection (32d), and
the second surface (68a) is used for a movement in a direction that the battery connector (62) is pulled out opposite to the connecting direction.

10. A battery (50) with connector according to any one of claims 6 to 9, wherein the wire (60a-60d) includes a plus power wire (60a), a minus power wire (60c) and a signal wire (60d) outputting an identification signal, and the wire (60a-60d) is connected with the battery connector by arranging the a plus power wire (60a), the minus power wire (60c) and the signal wire (60d).

11. A battery lid (32) used in a hand-held electronic device (10) comprising an accommodating portion (14), a built-in connector (42) provided inside the accommodating portion (14), and a battery (50) which is accommodated in the accommodating portion (14), and includes a main body (52) and a battery connector (62) coupled to the main body (52) via a wire (60a-60d) and connected to the built-in connector (42), and covers the accommodating portion (14), comprising:
a projection (32d) which prevent a connection state of the battery connector (62) and the built-in connector (42) from being disconnected when the battery lid (32) covers the accommodating portion (14) in a state that the battery (50) is accommodated in the accommodating portion (14) and the battery connector (62) and the built-in connector (42) are connected to each other.

12. A battery lid (32) according to claim 11, wherein the projection (32d) is provided in a manner capable of being elastically deformable.

13. A battery lid (32) according to claim 12, wherein the projection (32d) includes a plate member (320) a part (320a) of which is fixed to the battery lid (32), and a portion (320b) which is brought in proximity to or into contact with the battery connector (62) is provided near the batter connector (62) in comparison with the fixed portion (320a).

14. A battery lid (32) according to any one of claims 11 to 13, wherein the batter lid (32) is attached to the electronic device (10) by being slid, an sliding direction and the connecting direction of the battery connector (62) to the build-in connector (42) are identical with each other, and
the projection (32d) is brought in proximity to or into contact to a surface at a side opposite to the connecting direction of the battery connector (62).

15. A connector (62) for a battery accommodated in a battery accommodating portion (14) of a hand-held electronic device (10), comprising:
a connector main body;
a concave portion (70) formed on the connector main body; and
convex portions (68) formed by the concave portion (70) at ends of the connector main body, wherein
a connection state of the connector can be disconnected by moving the connector in a disconnecting direction by putting a finger in the concave portion (70), and when the accommodating portion (14) is covered by the battery lid (32), an end surface (68b) of the convex portion (68) is brought in proximity to or into contact with a projection (32d) provided on the battery lid (32), whereby a connection state with the hand-held electronic device (10) is prevented from being disconnected.

16. A connector disconnection preventing method for a hand-held electronic device (10) which comprises a battery (50) including a main body (52) and a battery connector (62) coupled to the main body (52) via a wire (60a-60d), an accommodating portion (14) for accommodating the battery (50), a battery lid (32) covering the accommodating portion (14) and a built-in connector (42) which is provided inside the accommodating portion (14) and connected to the battery connector (62), comprising a step of:
placing the projection (32d) provided on the battery lid (32) to be brought in proximity to or into contact with the battery connector (62) when the battery lid (32) covers the accommodating portion (14) in a state that the battery (50) is accommodated in the accommodating portion (14) and the battery connector (62) and the built-in connector (42) are connected to each other, whereby a connection state of the battery connector (62) and the built-in connector (42) are prevented from being disconnected.
